# EUROPEAN PATENT APPLICATION

(11) **EP 4 779 186 A1**
(43) Date of publication of application: **22.07.2026**
(21) Application number: 24874529.1
(22) Date of filing: 25.09.2024
(51) Int. Cl.: F16L 3/02, E03B 1/00, F16L 1/10, F16L 3/20

(54) **PIPE SUPPORT DEVICE AND METHOD FOR INSTALLING PIPE SUPPORT DEVICE**

(30) Priority: 05.10.2023 JP 2023173839
(71) Applicant: Kubota Corporation, Osaka-shi, Osaka 530-0011 (JP)
(72) Inventor: KAGEYAMA Hayato, Amagasaki-shi, Hyogo 661-0967 (JP)
(74) Representative: Müller-Boré & Partner Patentanwälte PartG mbB
(86) International application number: PCT/JP2024/034152
(87) International publication number: WO 2025/074924

(57) **Abstract**

An object of the present teaching is to provide a pipe support device that enables easy installation of a pipe in a trench and easy retrieval from the trench. A pipe support device 1 includes a main body 10 that allows placement of a pipe 90 thereon and a pair of stoppers 20 provided on the main body 10 for positioning the pipe 90 on the main body 10, and is disposed in an excavated trench 77 and is configured to support the pipe 90 in the trench 77. The main body 10 and the pair of stoppers 20 of the pipe support device 1 each have an internal space S therein into which a fluid F is injectable and from which the fluid F is dischargeable, and are configured to expand by injection of the fluid F into the internal space S and to contract by discharge of the fluid F from the internal space S.

## Description

### TECHNICAL FIELD

The present teaching relates to a pipe support device for supporting a pipe in an excavated trench, and a method for installing the pipe support device.

### BACKGROUND ART

In general, when water pipes, gas pipes, and the like are installed underground, it is necessary to couple a plurality of pipes to each other in a trench formed by excavating the ground. When the plurality of pipes are coupled in the trench, sleepers are used in order to support the pipes with their heights adjusted.

Patent Literature 1 discloses a method for laying an underground pipe in which an underground pipe is lowered to the bottom of an excavated trench while being supported by a bag body installed in the excavated trench, and after the bag body is retrieved from the excavated trench, the excavated trench is backfilled. Specifically, in the method for laying an underground pipe disclosed in Patent Literature 1, a fluid is injected into the bag body installed in the excavated trench, and the underground pipe is placed on a top surface of the bag body. Then, by discharge of the fluid, the bag body is contracted, and the underground pipe is lowered to the bottom of the excavated trench while being supported by the bag body. Thereafter, the bag body is retrieved from the excavated trench, and the excavated trench is backfilled.

The top surface of the bag body has a thickness greater than that of other portions of the bag body. In order to improve the seating of the underground pipe, a receiving groove having an arcuate cross section is formed in the top surface.

### CITATION LIST

### PATENT LITERATURE

Patent Literature 1: Japanese Laid-Open Patent Publication No. H08-261360

### SUMMARY OF INVENTION

### TECHNICAL PROBLEM

By injection of the fluid into or discharge of the fluid from the bag body of Patent Literature 1, the height of the underground pipe can be easily adjusted. Accordingly, by using the bag body, the underground pipe can be easily installed in the excavated trench.

However, as disclosed in FIGS. 5 and 6 of Patent Literature 1, the top surface of the bag body including the receiving groove does not contract or deform even after the bag body is contracted.

Therefore, when the bag body, which has been contracted by discharge of the fluid, is pulled out from beneath the underground pipe after the underground pipe has been installed in the excavated trench, an edge of the receiving groove may interfere with the underground pipe. As a result, the bag body may not be easily retrieved from beneath the underground pipe.

Accordingly, in regard to a pipe support device for supporting a pipe in a trench obtained by excavation, there has been a demand for a pipe support device that enables easy installation of a pipe in a trench and easy retrieval from the trench.

An object of the present teaching is to provide a pipe support device that enables easy installation of a pipe in a trench and easy retrieval from the trench.

### SOLUTION TO PROBLEM

A pipe support device according to one embodiment of the present teaching is a pipe support device that includes a main body that allows placement of a pipe thereon and a stopper provided on the main body for positioning the pipe on the main body, and that is disposed in an excavated trench and is configured to support the pipe in the trench. The main body and the stopper each have an internal space into which a fluid is injectable and from which the fluid is dischargeable, and are configured to expand by injection of the fluid into the internal space and to contract by discharge of the fluid from the internal space. (first configuration).

This allows the main body and the stopper to expand or contract by injection of a fluid into or discharge of the fluid from the internal spaces of the main body and the stopper. Accordingly, it is possible to easily change the sizes of the main body and the stopper by injection of a fluid into or discharge of the fluid from these internal spaces of the main body and the stopper. Therefore, the height of the pipe supported by the pipe support device can be easily adjusted in the trench.

Moreover, by contracting the main body and the stopper, it is possible to prevent the main body and the stopper from interfering with the pipe when the pipe support device is pulled out from beneath the pipe. Therefore, the pipe support device can be easily retrieved from beneath the pipe.

Accordingly, it is possible to provide a pipe support device that enables easy installation of a pipe in a trench and easy retrieval from the trench.

In the first configuration described above, the internal space includes a main body internal space located inside the main body and a stopper internal space located inside the stopper. The main body internal space and the stopper internal space are connected so that the fluid is movable between the internal spaces (second configuration).

Accordingly, the fluid can be injected into, or discharged from, one of the main body internal space or the stopper internal space. Therefore, compared with a case where the fluid is injected into and discharged from each of the main body internal space and the stopper internal space, the injection operation and the discharge operation of the fluid can be simplified.

In the second configuration described above, the stopper is configured such that, when the fluid is discharged from the internal space, the fluid in the stopper internal space is discharged after the fluid in the main body internal space is discharged (third configuration).

This allows, when the pipe support device is contracted by discharge of the fluid from the internal space of the pipe support device, the stopper to contract after the main body contracts. Therefore, it is possible to contract the main body first while the pipe is being held by the stopper. Accordingly, when the pipe support device is contracted, it is possible to prevent the pipe from rolling and moving in the horizontal direction. Thus, the pipe support device can be contracted in a state where the pipe is more stably supported.

**In** the second configuration described above, the main body includes, in an upper part, an injection/discharge port for injecting a fluid into the main body internal space or discharging the fluid from the main body internal space. The pipe support device further includes a connection pipe connected to the injection/discharge port for allowing the fluid to flow (fourth configuration).

This allows the fluid to be injected into the main body internal space or discharged from the main body internal space via the connection pipe and the injection/discharge port. Moreover, since the injection/discharge port is provided in the upper part of the main body, it is possible to prevent the connection pipe connected to the injection/discharge port from affecting the orientation of the pipe support device in the trench. Therefore, the pipe support device can be more easily installed in the trench.

**In** the first configuration described above, the pipe support device further includes an orientation adjuster in a form of a cord having one end connected to the main body so as to allow adjustment of an orientation of the main body in the trench (fifth configuration).

This allows easy adjustment of the orientation of the main body of the pipe support device in the trench. As a result, the pipe can be supported more reliably by the pipe support device in the trench.

In the first configuration described above, the main body and the stopper are integrally formed (sixth configuration).

Accordingly, it is not necessary for the stopper for positioning a pipe to be provided as a separate member relative to the main body that supports the pipe. Further, when the pipe support device is pulled out from beneath the pipe, the stopper is less likely to catch on the pipe. Therefore, the pipe support device can be more easily retrieved.

A method for installing a pipe support device according to one embodiment of the present teaching is a method for installing a pipe support device that includes a main body that allows placement of a pipe thereon and a stopper provided on the main body for positioning the pipe on the main body, and that is disposed in an excavated trench and configured to support the pipe in the trench. The method includes a disposition step of disposing, in the trench, the pipe support device in which a fluid has been injected into internal spaces of the main body and the stopper, a pipe support step of supporting the pipe by the pipe support device disposed in the trench, and a retrieval step of, after connecting the pipe to another pipe in the trench, discharging the fluid from the internal spaces of the main body and the stopper to contract the pipe support device, and retrieving the contracted pipe support device from the trench (first method).

This method allows the pipe to be easily supported in the excavated trench by the pipe support device that has been expanded by injection of the fluid into the internal spaces of the main body and the stopper. Then, by discharge of the fluid from the internal spaces to contract the pipe support device, the pipe can be easily installed in the trench.

Moreover, by contracting the main body and the stopper, it is possible to prevent the main body and the stopper from interfering with the pipe when the pipe support device is pulled out from beneath the pipe. Therefore, the pipe support device can be easily retrieved from beneath the pipe.

Therefore, the pipe can be easily installed in the trench, and the pipe support device can be easily retrieved from the trench.

In the first method described above, the method for installing the pipe support device further includes a height adjustment step of adjusting a height dimension of the main body of the pipe support device disposed in the trench by the disposition step (second method).

This allows easy adjustment of the height of the main body that supports the pipe in the pipe support device in the trench. Therefore, the height position of the pipe can be easily adjusted in the trench, thereby allowing the pipe to be connected to another pipe accurately and easily.

In the first method, the pipe includes a socket located at one end in an axial direction and a spigot located at the other end in the axial direction. In the disposition step, a plurality of pipe support devices are disposed in the trench so as to support the pipe at both ends in the axial direction. In the retrieval step, after the spigot of the pipe is connected to a socket of another pipe, the fluid is discharged from an internal space of one of the plurality of pipe support devices that supports an end of the pipe at the spigot side so as to contract the pipe support device, and the contracted pipe support device is retrieved from the trench (third method).

Accordingly, after the spigot of the pipe is connected to the socket of another pipe, the pipe support device supporting the end of the pipe at the spigot side can be removed. Therefore, the pipe support device supporting the end of the pipe at the spigot side can be easily removed while the end of the pipe at the socket side is being supported by another pipe support device.

In the first method described above, in the retrieval step, in the pipe support device to be retrieved from the trench, discharge of the fluid from the internal space of the stopper is started after discharge of the fluid from the internal space of the main body is started, thereby discharging the fluid from the internal space of the pipe support device to contract the pipe support device (fourth method).

This allows the stopper of the pipe support device to contract after the main body of the pipe support device contracts. Therefore, it is possible to contract the main body while the pipe is being held by the stopper. Accordingly, when the pipe support device is contracted, it is possible to prevent the pipe from moving in the horizontal direction with respect to the pipe support device.

### ADVANTAGEOUS EFFECTS OF INVENTION

A pipe support device according to one embodiment of the present teaching is a pipe support device that includes a main body that allows placement of a pipe thereon and a stopper provided on the main body for positioning the pipe on the main body, and that is disposed in an excavated trench and is configured to support the pipe in the trench. The main body and the stopper of this device each have an internal space into which a fluid is injectable and from which the fluid is dischargeable, and are configured to expand by injection of the fluid into the internal space and to contract by discharge of the fluid from the internal space.

A method for installing a pipe support device according to one embodiment of the present teaching is a method for installing a pipe support device that includes a main body that allows placement of a pipe thereon and a stopper provided on the main body for positioning the pipe on the main body, and that is disposed in an excavated trench and configured to support the pipe in the trench. The method includes a disposition step of disposing, in the trench, the pipe support device in which a fluid has been injected into internal spaces of the main body and the stopper, a pipe support step of supporting the pipe by the pipe support device disposed in the trench, and a retrieval step of, after connecting the pipe to another pipe in the trench, discharging the fluid from the internal spaces of the main body and the stopper to contract the pipe support device, and retrieving the contracted pipe support device from the trench.

This allows the main body and the stopper to expand or contract by injection of a fluid into or discharge of the fluid from the internal spaces of the main body and the stopper, thereby easily changing the sizes of the main body and the stopper. Accordingly, it is possible to provide a pipe support device that enables easy installation of a pipe in a trench and easy retrieval from the trench.

### BRIEF DESCRIPTION OF DRAWINGS

FIG. 1 is a diagram schematically illustrating a state in which a pipe is supported using a pipe support device according to Embodiment 1 during water pipe construction;
FIG. 2A is a front view of the pipe support device;
FIG. 2B is a top view of the pipe support device;
FIG. 2C is a cross-sectional view of the pipe support device of FIG. 2B, taken along the line A-A;
FIG. 3A is a diagram schematically illustrating a disposition step of disposing the pipe support device in an excavated trench;
FIG. 3B is a diagram schematically illustrating a pipe support step of supporting a pipe by the pipe support device and a height adjustment step of adjusting the height of the pipe;
FIG. 3C is a diagram illustrating a state in which the pipe support device is contracted in a retrieval step;
FIG. 3D is a diagram illustrating a state in which the pipe support device is retrieved from the trench in the retrieval step;
FIG. 4 is a flowchart describing a method for installing a pipe in an excavated trench using the pipe support device;
FIG. 5A is a front view of a pipe support device including an orientation adjuster;
FIG. 5B is a top view of the pipe support device including the orientation adjuster;
FIG. 5C is a diagram schematically illustrating a state in which the pipe support device including the orientation adjuster is disposed in an excavated trench;
FIG. 6A is a front view of a pipe support device in which a main body and stoppers are integrally formed;
FIG. 6B is a top view of the pipe support device in which the main body and the stoppers are integrally formed; and
FIG. 6C is a cross-sectional view of the pipe support device shown in FIG. 6B in which the main body and the stoppers are integrally formed, taken along the line B-B.

### DESCRIPTION OF EMBODIMENTS

Hereinafter, embodiments of the present teaching will be described with reference to the drawings. Note that the same reference signs are given to identical parts in the drawings, and description thereof is not repeated. Also, the dimensions of the components in each drawing do not accurately represent the actual dimensions of the components or dimensional ratios thereof.

In the following description, an axial direction refers to a direction in which an axis P of a pipe 90 extends. A radial direction refers to a direction orthogonal to the axis P of the pipe 90. A longitudinal direction X refers to a direction in which a pipe support device 1 extends. A transverse direction Y refers to a direction orthogonal to the longitudinal direction X.

In the following description, expressions such as "connected" and "attached" (hereinafter referred to as "connected or the like) include not only a case where members are directly connected or the like but also a case where the members are connected or the like through other members. That is, in the following description, the expression such as "connected or the like" includes meanings of direct and indirect connecting or the like between members.

### [Embodiment 1]

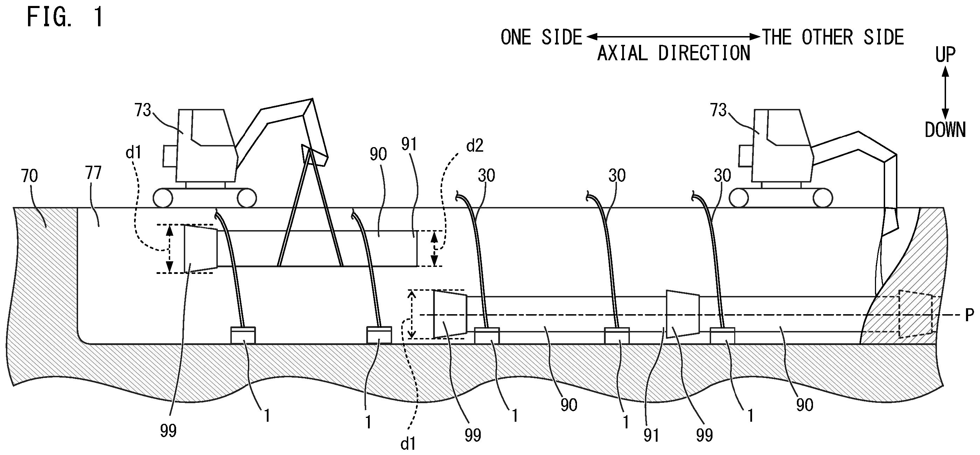

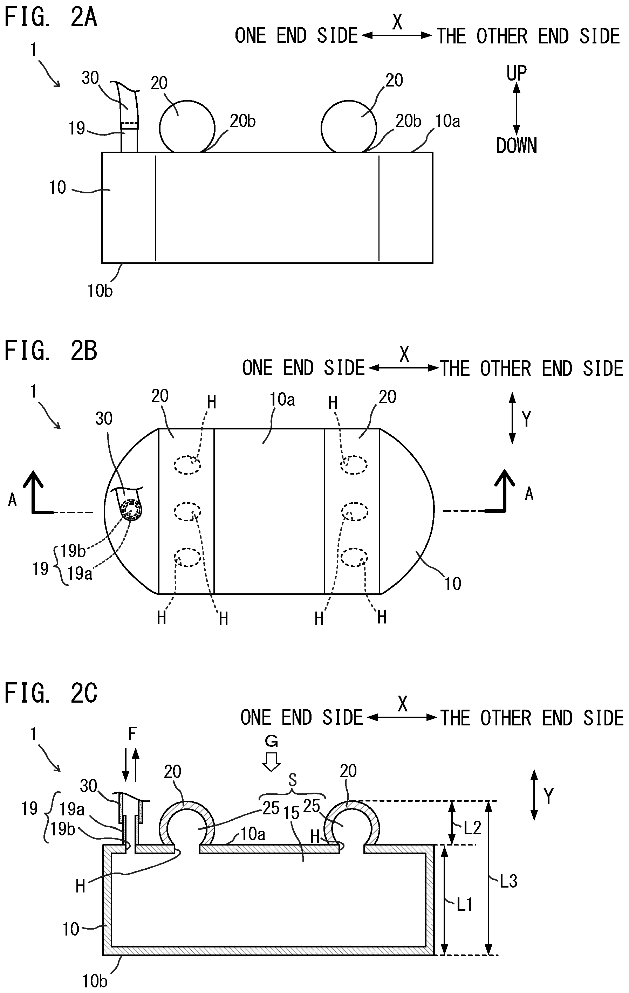

FIG. 1 is a diagram schematically illustrating a state in which the pipe 90 is supported using the pipe support device 1 according to Embodiment 1 during water pipe construction. FIG. 2A is a front view of the pipe support device 1. FIG. 2B is a top view of the pipe support device 1. FIG. 2C is a cross-sectional view of the pipe support device 1 of FIG. 2B taken along the line A-A.

The pipe 90 is, for example, a cast-iron pipe used for a water pipe and the like. The pipe 90 has a cylindrical shape extending along the axis P. As shown in FIG. 1, the pipe 90 is installed in a trench 77 formed by excavating ground 70 in a state where a plurality of pipes 90 are coupled in the axial direction.

The pipe 90 includes a socket 99 located at one end in the axial direction and a spigot 91 located at the other end in the axial direction. A pipe diameter d1 of the socket 99 is larger than a pipe diameter d2 of the spigot 91. During water pipe construction, the spigot 91 is inserted into the socket 99 of another pipe 90. Accordingly, during water pipe construction, a plurality of pipes 90 are coupled to each other in the axial direction.

### (Pipe Support Device)

The pipe support device 1 supports the pipe 90 in the trench 77 formed by excavating the ground 70 during water pipe construction, for example. As shown in FIG. 2, the pipe support device 1 has an approximately columnar shape made of fabric formed into a bag shape. The fabric has impermeability to a fluid F. The fabric is, for example, tarpaulin. The fluid F includes, for example, at least one of a gas such as air and a liquid such as water.

The pipe support device 1 includes a main body 10, a pair of stoppers 20, and a connection pipe 30.

As shown in FIGS. 2A to 2C, the main body 10 has a columnar shape formed from the fabric with a bag shape. The main body 10 has an oblong shape elongated in the longitudinal direction X as viewed in the up-down direction.

A pair of approximately cylindrical stoppers 20 is provided on an upper surface 10a of the main body 10. The main body 10 is formed separately from the pair of stoppers 20. A lower surface 10b of the main body 10 comes into contact with a bottom of the trench 77 when the pipe support device 1 is disposed in the trench 77.

Each of the pair of stoppers 20 has an approximately cylindrical shape extending in the transverse direction Y that is orthogonal to the longitudinal direction X of the main body 10. Similar to the main body 10, each of the pair of stoppers 20 is formed from the fabric with a bag shape. A part of a lower portion 20b of each of the pair of stoppers 20 is connected to the upper surface 10a of the main body 10. A dimension L2 of each of the pair of stoppers 20 in the up-down direction is smaller than a dimension L1 (height dimension) of the main body 10 in the up-down direction. That is, the thickness of each of the pair of stoppers 20 is smaller than the thickness of the main body 10.

The pair of stoppers 20 are disposed respectively at one end side in the longitudinal direction X and at the other end side in the longitudinal direction X, on the upper surface 10a of the main body 10. When the pipe 90 is supported by the pipe support device 1, the axis P of the pipe 90 is aligned with the transverse direction Y of the pipe support device 1, and the pipe 90 is disposed between the pair of stoppers 20. As a result, the pipe 90 is positioned on the main body 10 by the pair of stoppers 20. The pipe 90 is in contact with the upper surface 10a of the main body 10.

As shown in FIG. 2C, the pipe support device 1 has an internal space S therein. The internal space S includes a main body internal space 15 and a stopper internal space 25, which will be described later, respectively. The internal space S is a space within the pipe support device 1 into which the fluid F can be injected or from which the fluid F can be discharged. By injection of the fluid F into the internal space S, the pipe support device 1 expands. On the other hand, by discharge of the fluid F from the internal space S, the pipe support device 1 contracts.

The main body 10 has the main body internal space 15 therein. The main body internal space 15 is a part of the internal space S. By injection of the fluid F into the main body internal space 15, the main body 10 expands. On the other hand, by discharge of the fluid F from the main body internal space 15, the main body 10 contracts.

The main body 10 includes, on the upper surface 10a, an injection/discharge port 19 for allowing injection of the fluid F into the main body internal space 15 or discharge of the fluid F from the main body internal space 15. The injection/discharge port 19 is located on the upper surface 10a of the main body 10, at one end side in the longitudinal direction X. The injection/discharge port 19 includes a protrusion 19a and a hole 19b. The hole 19b opens in the upper surface 10a of the main body 10. The protrusion 19a has a hollow cylindrical shape protruding upward from the peripheral edge of the hole 19b on the upper surface 10a of the main body 10.

One end of the connection pipe 30, which will be described later, is connected to the protrusion 19a of the injection/discharge port 19. As will be described in detail later, a device for supplying or discharging the fluid F is connected to the other end of the connection pipe 30. Accordingly, the fluid F can be injected into the main body internal space 15 or discharged from the main body internal space 15 via the injection/discharge port 19. Although not specifically illustrated, the protrusion 19a may be provided with, for example, a valve capable of controlling an injection amount or a discharge amount of the fluid F.

Each of the pair of stoppers 20 has the stopper internal space 25 therein. The stopper internal space 25 is a part of the internal space S, which will be described later. By injection of the fluid F into the stopper internal space 25, the pair of stoppers 20 expands. On the other hand, by discharge of the fluid F from the stopper internal space 25, the pair of stoppers 20 contracts. The volume of the stopper internal space 25 is smaller than the volume of the main body internal space 15.

In the pipe support device 1, a part of the lower portion 20b of each of the pair of stoppers 20 is joined to the upper surface 10a of the main body 10. The joining includes, for example, bonding using an adhesive, and welding. At the joint part between the pair of stoppers 20 and the main body 10, one or more through holes H penetrating the upper surface 10a of the main body 10 and the lower portion 20b of each of the pair of stoppers 20 in the up-down direction are provided. Accordingly, the main body internal space 15 and the stopper internal space 25 are connected so that the fluid F is movable between these internal spaces 15 and 25 through the through holes H.

The connection pipe 30 is a hollow tubular member extending in one direction and having flexibility. The length of the connection pipe 30 is greater than the depth of the excavated trench 77. The connection pipe 30 is, for example, a resin tube.

One end of the connection pipe 30 is connected to the injection/discharge port 19 provided on the upper surface 10a of the main body 10. The other end of the connection pipe 30 is connected to a supply/discharge device (not shown) for supplying or discharging the fluid F. For example, when the fluid F is a gas, the supply/discharge device is an air compressor, a blower, or the like. The supply/discharge device is capable of supplying the fluid F to the internal space S or discharging the fluid F from the internal space S via the connection pipe 30. Alternatively, instead of the supply/discharge device, separate devices respectively having a supply function and a discharge function may be used.

With the above configuration, by injection of the fluid F into the internal space S of the pipe support device 1 via the connection pipe 30 and the injection/discharge port 19, the fluid F can be injected into the main body internal space 15 and the stopper internal space 25. Accordingly, the main body 10 and the pair of stoppers 20 can both be expanded. On the other hand, by discharge of the fluid F from the internal space S via the connection pipe 30 and the injection/discharge port 19, the fluid F can be discharged from the main body internal space 15 and the stopper internal space 25. Accordingly, the main body 10 and the pair of stoppers 20 can both be contracted.

Accordingly, the sizes of the main body 10 and the pair of stoppers 20 can be easily changed. More specifically, the size of a total dimension L3, which is the sum of a height dimension L1 of the main body 10 and the dimension L2 of the stoppers 20 in the up-down direction, can be easily changed. Therefore, a height position of the pipe 90 supported by the pipe support device 1 in the trench 77 can be easily adjusted. Therefore, the height position of the spigot 91 of the pipe 90 can be easily aligned with the height position of the socket 99 of another pipe 90, so that the spigot 91 of the pipe 90 can be connected to the socket 99 of another pipe 90.

Moreover, since not only the main body 10 but also the pair of stoppers 20 contracts, it is possible to prevent the pair of stoppers 20 from interfering with the pipe 90 when the pipe support device 1 is pulled out from beneath the pipe 90. Accordingly, the pipe support device 1 can be easily retrieved from beneath the pipe 90.

Thus, it is possible to provide the pipe support device 1 that enables easy installation of the pipe 90 in the trench 77 and easy retrieval from the trench 77.

Further, the main body internal space 15 and the stopper internal space 25 are connected so that the fluid F is movable between these internal spaces 15 and 25 through the through holes H. Accordingly, the fluid F in the internal space S can be injected into and discharged from the main body internal space 15 of the main body 10 in which the injection/discharge port 19 is provided. Therefore, compared with a configuration in which separate injection/discharge ports for injecting or discharging the fluid F are provided respectively for the main body internal space 15 and the stopper internal space 25, the injection operation and the discharge operation of the fluid F can be simplified.

Further, as shown in FIG. 2C, in a state where the pipe 90 is disposed on the upper surface 10a of the main body 10 having the above-described configuration, a pressure greater than that acting on the pair of stoppers 20 is applied to the main body 10 due to a load G of the pipe 90. Therefore, when the fluid F in the internal space S is discharged via the injection/discharge port 19 in the state where the pipe 90 is disposed on the upper surface 10a of the main body 10, the fluid F in the main body internal space 15 is discharged before the fluid F in the stopper internal space 25 is discharged. As a result, the main body 10 can be contracted first while suppressing the contraction of the pair of stoppers 20, thereby reducing the height dimension L1 of the main body 10.

That is, when the pipe support device 1 is contracted by discharge of the fluid F from the internal space S of the pipe support device 1, the pair of stoppers 20 contracts after the main body 10 contracts. Therefore, the timing at which the dimension L2 of the pair of stoppers 20 in the up-down direction is reduced is later than the timing at which the height dimension L1 of the main body 10 is reduced. Therefore, it is possible to contract the main body 10 first while movement of the pipe 90 in a horizontal direction (the longitudinal direction X) is suppressed by the pair of stoppers 20. As a result, the pipe support device 1 can be contracted in a state where the pipe 90 is stably supported.

Further, since the injection/discharge port 19 is provided on the upper surface 10a of the main body 10, it is possible to prevent the connection pipe 30 connected to the injection/discharge port 19 from affecting an orientation of the pipe support device 1 in the trench 77. Therefore, the pipe support device 1 can be more easily installed in the trench 77.

Moreover, the injection/discharge port 19 is provided at one end side of the main body 10 in the longitudinal direction X, and also the length of the connection pipe 30 is longer than the depth of the excavated trench 77. Accordingly, the operator can operate the connection pipe 30 from the ground and easily retrieve the pipe support device 1 from beneath the pipe 90 in the trench 77.

### (Pipe Installation Method Using the Pipe Support Device)

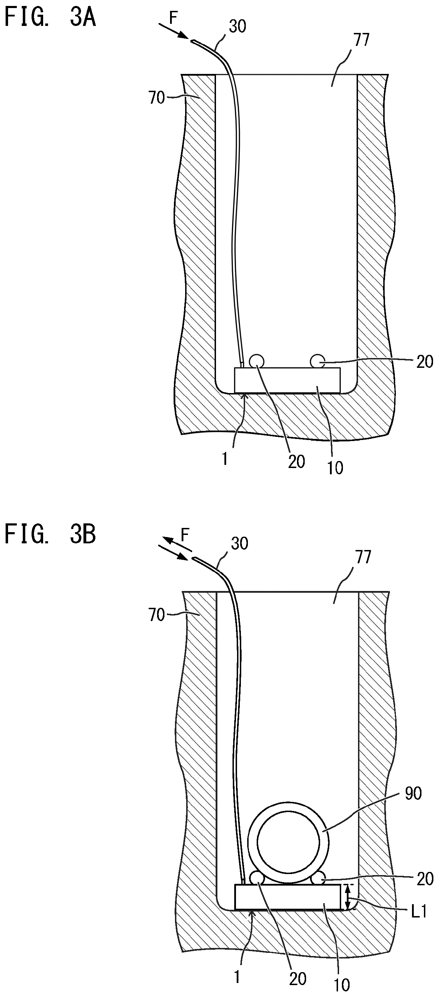

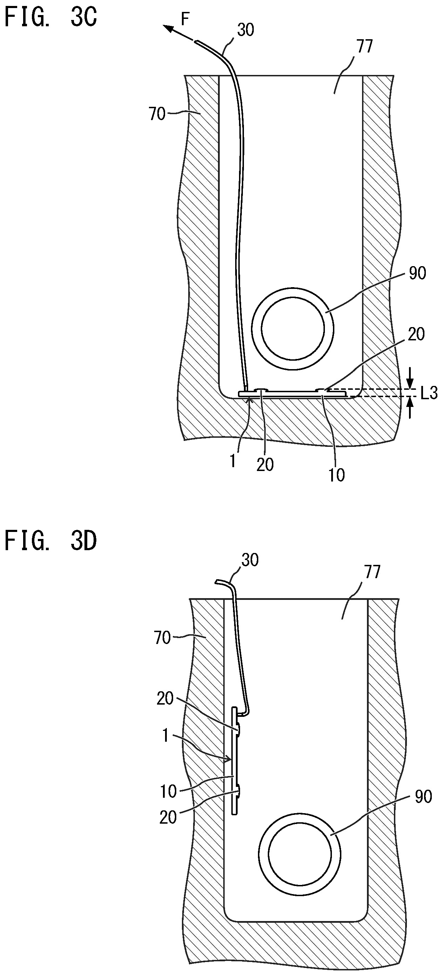

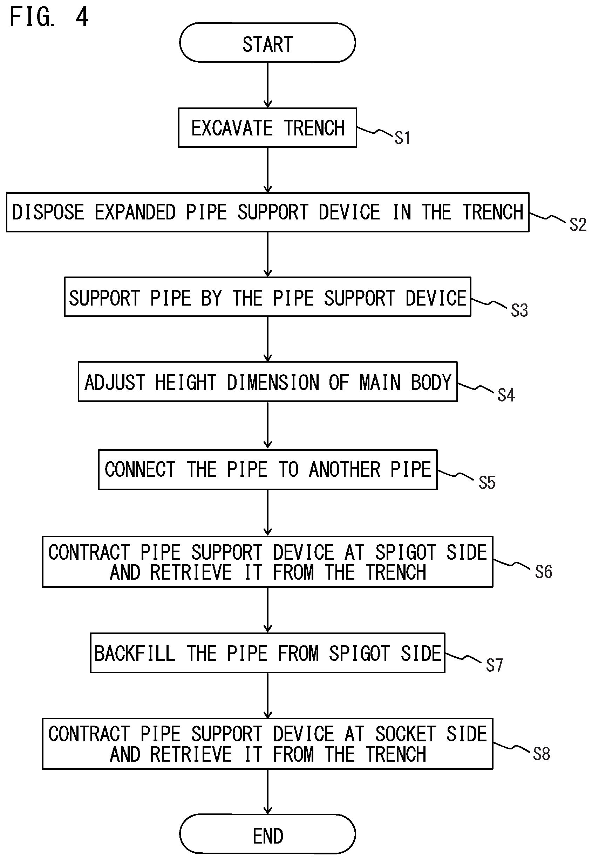

FIG. 3A is a diagram schematically illustrating a disposition step S2 of disposing the pipe support device 1 in the excavated trench 77. FIG. 3B is a diagram schematically illustrating a pipe support step S3 of supporting the pipe 90 by the pipe support device 1 and a height adjustment step S4 of adjusting the height of the pipe 90. FIG. 3C is a diagram illustrating a state in which the pipe support device 1 is contracted in a retrieval step S6. FIG. 3D is a diagram illustrating a state in which the pipe support device 1 is retrieved from the trench 77 in the retrieval step S6. FIG. 4 is a flowchart describing a method for installing the pipe 90 in the excavated trench 77 using the pipe support device 1. Hereinafter, a method for installing the pipe 90 using the pipe support device 1 is described with reference to FIG. 1, FIGS. 3A to 3D, and FIG. 4.

When the flow shown in FIG. 4 starts (START), first, in the step S1, the trench 77 is formed by excavating the ground 70 using a work machine 73 or the like. The bottom of the excavated trench 77 is leveled flat by the work machine 73 or the like. The work machine 73 is, for example, a shovel.

In the subsequent step S2, the main body 10 and the pair of stoppers 20 of the pipe support device 1 are expanded by injection of the fluid F into the internal space S via the connection pipe 30 using the supply/discharge device. As shown in FIG. 3A, the expanded pipe support device 1 is lowered to the bottom of the trench 77. At this time, the operator adjusts the position of the pipe support device 1 by moving the pipe support device 1 using the connection pipe 30. A plurality of pipe support devices 1 are disposed at positions at which the pipe 90 can be supported at both ends in the axial direction.

Thereafter, in the step S3, as shown in FIG. 3B, the pipe 90 is lowered by the work machine 73 or the like onto the upper surface 10a of the main body 10 of each of the plurality of pipe support devices 1 disposed in the trench 77. One end side and the other end side of the pipe 90 in the axial direction are supported by the plurality of pipe support devices 1 disposed in the trench 77.

In the subsequent step S4, as shown in FIG. 3B, the height dimension L1 of the main body 10 is adjusted by injection of the fluid F into the internal space S of the pipe support device 1 or discharge of the fluid F from the internal space S. Accordingly, the height position of the pipe 90 supported by the pipe support device 1 can be adjusted. The height dimension L1 of the main body 10 is adjusted, for example, so that the axis P of the pipe 90 becomes horizontal and the spigot 91 of the pipe 90 is positioned to be connectable to the socket 99 of another pipe 90.

Thereafter, in the step S5, the pipe 90 is moved in the axial direction by the work machine 73 or the like, so that the spigot 91 of the pipe 90 is connected to the socket 99 of another pipe 90. Accordingly, the pipe 90 is coupled to another pipe 90.

In the subsequent step S6, as shown in FIG. 3C, the main body 10 and the pair of stoppers 20 of the pipe support device 1 are contracted by discharge of the fluid F by the supply/discharge device from the internal space S of the pipe support device 1 that supports an end of the pipe 90 at the spigot 91 side. At this time, the fluid F in the main body internal space 15 is discharged before the fluid F in the stopper internal space 25 is discharged.

The total dimension L3, which is the sum of the height dimension L1 of the main body 10 and the dimension L2 of the pair of stoppers 20 in the up-down direction of the contracted pipe support device 1, is smaller than the height from the bottom of the trench 77 in which the pipe support device 1 is installed to the bottom of the pipe 90 coupled to another pipe 90.

As shown in FIG. 3D, the pipe support device 1 in which the main body 10 and the pair of stoppers 20 are contracted is pulled out from beneath the pipe 90 by pulling the connection pipe 30 from the ground. Accordingly, the pipe support device 1 is retrieved from the trench 77.

Thereafter, in the step S7, an area of the trench in which the pipe 90 is laid is backfilled from the spigot 91 side up to a position immediately before the pipe support device 1 located at the socket 99 side.

In the subsequent step S8, by repeating the steps S2 to S5, the socket 99 of the pipe 90 is coupled to the spigot 91 of another pipe 90. Thereafter, similarly to the step S6, the pipe support device 1 located at the socket 99 side is contracted, and then this pipe support device 1 is retrieved from the trench 77. Thereafter, the flow ends (END).

In this manner, the pipes 90 are coupled in the axial direction. Here, the step S2 corresponds to the disposition step, the step S3 corresponds to the pipe support step, the step S4 corresponds to the height adjustment step, and the step S6 corresponds to the retrieval step.

According to the above-described method, the pipe 90 can be easily supported in the trench 77 by the pipe support device 1 that has been expanded by injection of the fluid F into the internal space S. Further, by injection of the fluid F into the internal space S or discharge of the fluid F from the internal space S, the pipe support device 1 can be expanded or contracted to adjust the height position of the pipe 90. Therefore, the pipe 90 can be easily connected to another pipe 90. Accordingly, the pipe 90 can be easily installed in the trench 77.

Moreover, by contracting the main body 10 and the pair of stoppers 20, it is possible to prevent the main body 10 and the pair of stoppers 20 from interfering with the pipe 90 when the pipe support device 1 is pulled out from beneath the pipe 90. Accordingly, the pipe support device 1 can be easily retrieved from beneath the pipe 90.

Therefore, the pipe 90 can be easily installed in the trench 77, and the pipe support device 1 can be easily retrieved from the trench 77.

Further, by supplying or discharging the fluid F via the connection pipe 30, the height dimension L of the main body 10 of the pipe support device 1 that supports the pipe 90 in the trench 77 can be easily adjusted. Therefore, the height position of the pipe 90 can be easily adjusted in the trench 77, thereby allowing the pipe 90 to be connected to another pipe 90 accurately and easily.

Further, after the spigot 91 of the pipe 90 is connected to the socket 99 of another pipe 90, the pipe support device 1 that supports an end of the pipe 90 at the spigot 91 side can be contracted in a state where an end of the pipe 90 at the socket 99 side is supported by the pipe support device 1. Accordingly, the contracted pipe support device 1 can be removed from beneath the pipe 90. Therefore, the pipe support device 1 that supports the end of the pipe 90 at the spigot 91 side can be easily removed.

Further, when the fluid F is discharged from the internal space S of the pipe support device 1, the fluid F in the main body internal space 15 is discharged before the fluid in the stopper internal space 25 is discharged. Accordingly, the pair of stoppers 20 can be contracted after the main body 10 is contracted. Therefore, it is possible to contract the main body 10 while movement of the pipe 90 in the horizontal direction (the longitudinal direction X) is suppressed by the pair of stoppers 20.

### (Other Embodiments)

Although embodiments of the present teaching have been described above, the above-described embodiments are merely examples for implementing the present teaching. Therefore, the present teaching is not limited to the above-described embodiments, and various modifications may be made to the above-described embodiments as appropriate without departing from the subject matter of the present teaching.

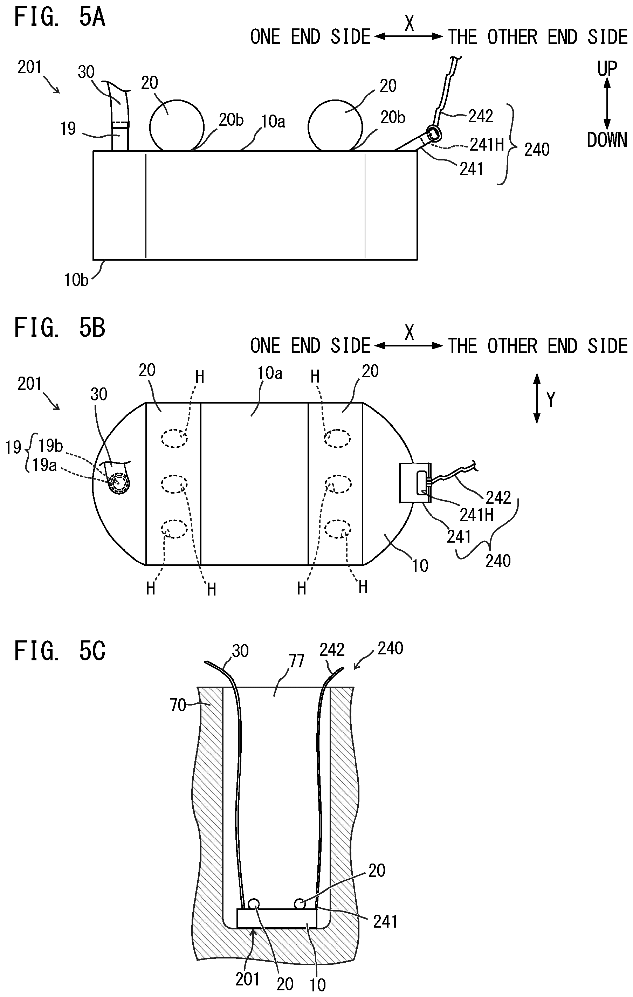

FIG. 5A is a front view of a pipe support device 201 including an orientation adjuster 240. FIG. 5B is a top view of the pipe support device 201. FIG. 5C is a diagram schematically illustrating a state in which the pipe support device 201 is disposed in the excavated trench 77.

As shown in FIGS. 5A and 5B, the pipe support device 201 may include the orientation adjuster 240, which adjusts the installation orientation of the pipe support device 201 in the trench 77, on the upper surface 10a of the main body 10 at the other end side in the longitudinal direction X. The orientation adjuster 240 includes an attachment 241 and a cord 242.

The attachment 241 is provided on the upper part 10a of the main body 10 at the other end side in the longitudinal direction X. One end of the attachment 241 is connected to the upper surface 10a. The attachment 241 may be formed of, for example, the same fabric as that of the main body 10. The attachment 241 may also be formed of a material different from that of the main body 10.

The attachment 241 includes an annular portion 241H with a through hole penetrating in a thickness direction of the attachment 241. One end of the cord 242 is attached to the annular portion 241H. The attachment 241 does not necessarily have the annular portion 241H. The attachment 241 may have any configuration as long as the cord 242 can be attached thereto.

The cord 242 is a member in the form of a cord extending in one direction. As shown in FIG. 5C, the cord 242 has a length at least longer than the depth of the excavated trench 77. One end of the cord 242 is connected to the main body 10 by the attachment 241. The cord 242 may be directly connected to the main body 10 without using the attachment 241. The other end of the cord 242 extends to the ground and is grasped, for example, by an operator.

With this configuration, by allowing the operator to operate the cord 242 of the orientation adjuster 240 from the ground, the orientation of the pipe support device 201 can be easily adjusted in the trench 77. Moreover, the operator can operate the connection pipe 30 on one side in a direction orthogonal to the axial direction of the pipe 90, while operating the orientation adjuster 240 on the other side. Therefore, adjustment of the orientation of the pipe support device 201 can be performed more easily. As a result, the pipe 90 can be supported more reliably by the pipe support device 201 in the trench 77.

In the embodiments described above, the main body 10 and the pair of stoppers 20 are formed as separate members. However, the main body and the stoppers may be formed integrally.

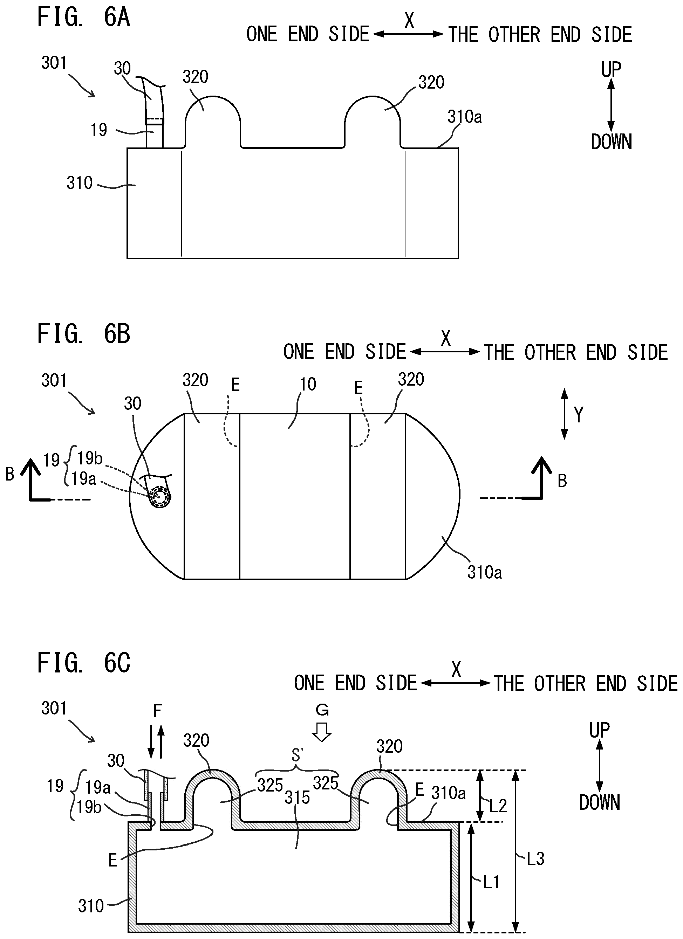

FIG. 6A is a front view of a pipe support device 301 in which a main body 310 and stoppers 320 are formed integrally. FIG. 6B is a top view of the pipe support device 301. FIG. 6C is a cross-sectional view of the pipe support device 301 taken along the line B-B.

The pipe support device 301 includes the main body 310, the stoppers 320, and the connection pipe 30. As shown in FIGS. 6A to 6C, the main body 310 and the stoppers 320 are formed integrally.

The main body 310 includes a main body internal space 315. Each of the stoppers 320 includes a stopper internal space 325. The pipe support device 301 has an internal space S' formed of the main body internal space 315 and the stopper internal spaces 325. In the internal space S', the main body internal space 315 and the stopper internal spaces 325 are integrally connected through a boundary E.

Accordingly, the main body 310 and the stoppers 320 can be formed integrally. Therefore, the pipe support device 301 can be easily manufactured. Further, since the main body 310 and the stoppers 320 are smoothly connected to each other in the longitudinal direction X, the stoppers 320 are less likely to catch on the pipe 90 when the pipe support device 301 is pulled out from beneath the pipe 90. Therefore, the pipe support device 301 can be easily retrieved. In addition, the boundary between the main body 310 and the stoppers 320 is less likely to be damaged.

In the embodiments described above, the pipe support device 1 is formed of a fabric having impermeability to the fluid F. However, the pipe support device 1 may be formed of any material as long as the material has impermeability to a fluid and has flexibility that allows expansion and contraction by injection and discharge of the fluid. For example, the pipe support device 1 may be formed of such as a fabric impregnated with silicone, a resin film, or a rubber sheet.

In the embodiments described above, the main body 10 has a columnar shape and also has an oblong shape elongated in the longitudinal direction X as viewed in the up-down direction. The pair of stoppers 20 has an approximately cylindrical shape. However, the main body and the stoppers may have other shapes. For example, the main body may have a rectangular prism shape. Further, each stopper may have a polygonal column shape or may be a protrusion. Further, each stopper may be a groove having an arc-shaped cross section and formed on the upper surface of the main body.

In the embodiments described above, the thickness of the pair of stoppers 20 is smaller than the thickness of the main body 10. However, the thickness of at least one of the pair of stoppers may be equal to or similar to the thickness of the main body. Further, the thickness of at least one of the pair of stoppers may be greater than the thickness of the main body.

In the embodiments described above, the dimension L2 of the pair of stoppers 20 in the up-down direction is smaller than the height dimension L1 of the main body 10. However, the dimension of the pair of stoppers in the up-down direction may be equal to or greater than the height dimension of the main body.

In the embodiments described above, the pair of stoppers 20 is provided on the upper surface 10a of the main body 10. However, the pair of stoppers may be provided in an upper part of the main body, instead of being provided on the upper surface of the main body. The "upper part of the main body" refers to a portion above a midpoint of the main body in the up-down direction.

In the embodiments described above, the pair of stoppers 20 are respectively provided on the upper surface 10a of the main body 10, at one end side and at the other end side in the longitudinal direction X. However, the stopper may be provided on the upper surface of the main body only at one end side in the longitudinal direction.

In the embodiments described above, each of the pair of stoppers 20 has the stopper internal space 25. However, only one of the pair of stoppers may have the stopper internal space.

In the embodiments described above, the main body internal space 15 and the stopper internal space 25 are connected so that the fluid F is movable between the internal spaces 15 and 25 through the through holes H. However, the main body internal space and the stopper internal space may not be connected, and the injection/discharge ports may be provided in each of the main body and the stoppers.

In the embodiments described above, the injection/discharge port 19 is provided on the upper surface 10a of the main body 10. However, the injection/discharge port may be provided on a side surface in the upper part of the main body. The injection/discharge port may be provided in a portion other than the upper part of the main body. The injection/discharge port may be provided on the stoppers.

In the embodiments described above, the main body 10 includes the injection/discharge port 19 for injecting the fluid F into the main body internal space 15 or discharging the fluid F from the main body internal space 15. However, the main body may have an injection port for injecting the fluid into the internal space and a discharge port for discharging the fluid from the internal space. Further, the stoppers may have the injection port and the discharge port. The injection port may be provided on one of the main body or the stoppers, and the discharge port may be provided on the other one of the main body or the stoppers.

In the embodiments described above, the pipe support device may be provided, in each through hole connecting the main body internal space and the stopper internal space, with a valve (for example, a check valve) or the like that allows the fluid to flow easily from the main body internal space to the stopper internal space, while restricting flow of the fluid from the stopper internal space to the main body internal space.

### INDUSTRIAL APPLICABILITY

The present teaching is applicable to a pipe support device configured to support a pipe in an excavated trench.

### REFERENCE SIGNS LIST

1, 201, 301: pipe support device
10, 310: main body
10a: upper surface (main body)
10b: lower surface (main body)
15, 315: main body internal space
19: injection/discharge port
19a: protrusion
19b: hole
20, 320: stopper
20b: lower portion (stopper)
25, 325: stopper internal space
30: connection pipe
70: ground
73: work machine
77: trench
90: pipe
91: spigot
99: socket
240: orientation adjuster
241: attachment
241H: annular portion
242: cord
P: axis
F: fluid
H: through hole
S, S': internal space
G: load of pipe
L1: height dimension of main body
L2: dimension of stopper in up-down direction
L3: total dimension
E: boundary

## Claims

1. A pipe support device, comprising:
a main body that allows placement of a pipe thereon; and
a stopper provided on the main body for positioning the pipe on the main body,
the pipe support device being disposed in an excavated trench and configured to support the pipe in the trench,
wherein
the main body and the stopper each have an internal space into which a fluid is injectable and from which the fluid is dischargeable, and are configured to expand by injection of the fluid into the internal space and to contract by discharge of the fluid from the internal space.

2. The pipe support device according to claim 1, wherein
the internal space comprises:
a main body internal space located inside the main body; and
a stopper internal space located inside the stopper,
the main body internal space and the stopper internal space are connected so that the fluid is movable between the internal spaces.

3. The pipe support device according to claim 2, wherein
the stopper is configured such that, when the fluid is discharged from the internal space, the fluid in the stopper internal space is discharged after the fluid in the main body internal space is discharged.

4. The pipe support device according to claim 2, wherein
the main body comprises, in an upper part, an injection/discharge port for injecting a fluid into the main body internal space or discharging the fluid from the main body internal space,
the pipe support device further comprises a connection pipe connected to the injection/discharge port for allowing the fluid to flow.

5. The pipe support device according to claim 1, further comprising an orientation adjuster in a form of a cord having one end connected to the main body so as to allow adjustment of an orientation of the main body in the trench.

6. The pipe support device according to claim 1, wherein
the main body and the stopper are integrally formed.

7. A method for installing a pipe support device, comprising a main body that allows placement of a pipe thereon and a stopper provided on the main body for positioning the pipe on the main body, the pipe support device being disposed in an excavated trench and configured to support the pipe in the trench,
the method comprising:
a disposition step of disposing, in the trench, the pipe support device in which a fluid has been injected into internal spaces of the main body and the stopper;
a pipe support step of supporting the pipe by the pipe support device disposed in the trench; and
a retrieval step of, after connecting the pipe to another pipe in the trench, discharging the fluid from the internal spaces of the main body and the stopper to contract the pipe support device, and retrieving the contracted pipe support device from the trench.

8. The method for installing a pipe support device according to claim 7, further comprising a height adjustment step of adjusting a height dimension of the main body of the pipe support device disposed in the trench by the disposition step.

9. The method for installing a pipe support device according to claim 7, wherein
the pipe comprises a socket located at one end in an axial direction and a spigot located at the other end in the axial direction,
in the disposition step, a plurality of pipe support devices are disposed in the trench so as to support the pipe at both ends in the axial direction, and
in the retrieval step, after the spigot of the pipe is connected to a socket of another pipe, the fluid is discharged from an internal space of one of the plurality of pipe support devices that supports an end of the pipe at the spigot side so as to contract the pipe support device, and the contracted pipe support device is retrieved from the trench.

10. The method for installing a pipe support device according to claim 7, wherein
in the retrieval step, in the pipe support device to be retrieved from the trench, discharge of the fluid from the internal space of the stopper is started after discharge of the fluid from the internal space of the main body is started, thereby discharging the fluid from the internal space of the pipe support device to contract the pipe support device.
